# EUROPEAN PATENT SPECIFICATION

(11) **EP 4 224 403 B1**
(45) Date of publication and mention of the grant of the patent: **13.08.2025**
(21) Application number: 20956328.7
(22) Date of filing: 02.10.2020
(51) Int. Cl.: G06Q 50/10, G06Q 10/10, G06Q 10/04

(54) **INFORMATION PROCESSING DEVICE, INFORMATION PROCESSING METHOD, AND STORAGE MEDIUM**
INFORMATIONSVERARBEITUNGSVORRICHTUNG, INFORMATIONSVERARBEITUNGSVERFAHREN UND SPEICHERMEDIUM
DISPOSITIF DE TRAITEMENT D'INFORMATIONS, PROCÉDÉ DE TRAITEMENT D'INFORMATIONS ET SUPPORT DE STOCKAGE

(43) Date of publication of application: 09.08.2023
(73) Proprietor: NEC Corporation, 108-8001 Tokyo (JP)
(72) Inventor: HAYASAKA, Akihiro, Tokyo 108-8001 (JP)
(74) Representative: Betten & Resch
(86) International application number: PCT/JP2020/037522
(87) International publication number: WO 2022/070400

(56) References cited:
- WO-A1-2018/225391
- JP-A- 2004 202 766
- JP-A- 2011 060 107
- JP-A- 2017 021 603
- JP-A- 2017 021 603
- JP-A- 2020 064 541
- JP-A- 2020 064 541
- US-A1- 2017 142 102

## Description

### TECHNICAL FIELD

Some non-limiting embodiments relate to a method of digitizing a certificate.

### BACKGROUND ART

Recently, public certificates including a face photograph such as a driver's license and a passport are gradually changed from paper media to digital data. With the digitization of the public certificate, it is necessary to confirm that the digitized public certificate is real, i.e., not a counterfeit. Patent Document 1 discloses a technique for recognizing characters, symbols, or the like by OCR process from the image data of a driver's license, and performing authenticity determination of the certificate based on whether or not the recognized characters and symbols conform to a predetermined rule. JP 2020064541 A relates to personal identification. US 2017/142102 A1 relates to a confidential information storing. JP 2017 021603 A refers to a check validity device to verify the validity of the medium.

### PRECEDING TECHNICAL REFERENCES

### PATENT DOCUMENT

Patent Document 1: Japanese Patent Application Laid-Open under No. 2017-120570

### SUMMARY

### PROBLEM TO BE SOLVED

In the technique of Patent Document 1, the authenticity determination of the certificate is performed based on the characters and symbols extracted from the image data of the certificate, but the check related to the face image displayed on the certificate is not described. Therefore, it is not possible to prevent a malicious person from falsifying the face image of the certificate or registering a certificate of another person.

One object of the some non-limiting embodiments is to provide an information processing device capable of determining authenticity of a certificate even when the information included in the certificate matches.

### MEANS FOR SOLVING THE PROBLEM

According to an example aspect of the present disclosure, there is provided an information processing device comprising:
a certificate acquisition means for acquiring a certificate and generating a certificate image;
an acquisition means for acquiring a first hash value from the certificate;
a reading means for reading information on the surface of the certificate from the certificate image;
a comparison means for calculating a second hash value using the information;
comparing the second hash value with the first hash value; and
a registration means for storing information related to the certificate based on a result of comparing the second hash value with the first hash value.

According to another example aspect of the present disclosure, there is provided an information processing method comprising:
acquiring a certificate and generating a certificate image;
acquiring a first hash value from the certificate;
reading information on the surface of the certificate from the certificate image;
calculating a second hash value using the information;
comparing the second hash value with the first hash value; and
storing information related to the certificate based on a result of comparing the second hash value with the first hash value.

According to still another example aspect of the present disclosure, there is provided a recording medium recording a program, the program causing a computer to execute processing of:
acquiring a certificate and generating a certificate image;
acquiring a first hash value from the certificate;
reading information on the surface of the certificate from the certificate image;
calculating a second hash value using the information;
comparing the second hash value with the first hash value; and
storing information related to the certificate based on a result of comparing the second hash value with the first hash value.

### EFFECT

According to the present disclosure, even when the information included in the certificate matches, it is possible to determine the authenticity of the certificate.

### BRIEF DESCRIPTION OF THE DRAWINGS

FIG. 1 shows a hardware configuration of a terminal device according to a first example embodiment.
FIG. 2 shows a functional configuration of the terminal device according to the first example embodiment.
FIGS. 3A and 3B are examples of embedding a hash value in a certificate.
FIG. 4 is a flowchart of certificate digitization processing according to the first example embodiment.
FIG. 5 shows a functional configuration of a terminal device according to the second example embodiment.
FIG. 6 is a flowchart of certificate digitization processing according to the second example embodiment.
FIG. 7 shows a configuration of a terminal device according to the third example embodiment.
FIG. 8 shows a manner of photographing a certificate image.
FIGS. 9A to 9C show a manner of photographing a face image.
FIGS. 10A to 10C are examples of authentication method for displaying a certificate image.
FIGS. 11A to 11D are examples of selecting display information.
FIGS. 12A and 12B are examples of displaying a registered certificate image in its entirety.
FIG. 13 shows a functional configuration of an information processing device according to a fourth example embodiment.
FIG. 14 is a flowchart of registration processing according to the fourth example embodiment.

### EXAMPLE EMBODIMENTS

Preferred example embodiments will be described with reference to the accompanying drawings. In the following example embodiments, it is assumed that a user photographs a public certificate of a paper medium such as a driver's license or a passport by using his or her smartphone or a tablet terminal (hereinafter, referred to as "terminal device") and registers the photographed image in a public certificate application installed in the terminal device or the like.

### <First example embodiment>

### [Basic Principle]

When registering a certificate electronically with a terminal device, a malicious person may attempt to register another person's certificate with his own terminal device as it is, or to register another person's certificate with his own terminal device by only changing the face image. In this case, it is not possible to prevent registration by a malicious person unless a check on the face image included in the certificate is performed.

Therefore, in this example embodiment, a local government or an organization issuing a certificate (hereinafter, referred to as "certificate issuer".) embeds information for checking in the certificate. Specifically, the certificate issuer generates a hash value based on the character information (personal information such as the address, the name, and the date of birth) and the face image shown on the surface of certificate, and embeds the hash value in the certificate at the time of issuing the certificate. The following methods can be used to embed a hash value in a certificate.
(1) Print a hash value on the surface of the certificate as code information such as a QR code (registered trademark).
(2) Embed a hash value in a part or whole of the surface of the certificate as an electronic watermark.
(3) When the certificate includes a storage unit such as an IC card, store a hash value in the storage unit.

This ensures that each certificate always maintains the hash value generated from the correct personal information and face image of the owner of the certificate. When embedding the hash value in a certificate, the hash value may be encrypted in some way.

When the certificate is digitized and registered with the terminal device as digital data, the user photographs the certificate using the terminal device. The terminal device extracts the character information and the face image from the photographed image and generates a hash value. Also, the terminal device obtains the hash value embedded in advance in the certificate. Then, the terminal device checks the hash value generated from the photographed image of the certificate with the hash value embedded in the certificate. If the two hash values coincide, the terminal device determines that there is no falsification of the information and registers the certificate with the terminal device as digital data. Thus, if any part of the character information and the face image of the certificate is falsified, the two hash values do not match. Therefore, the terminal device detects the falsification, and the registration can be stopped.

### [Hardware Configuration]

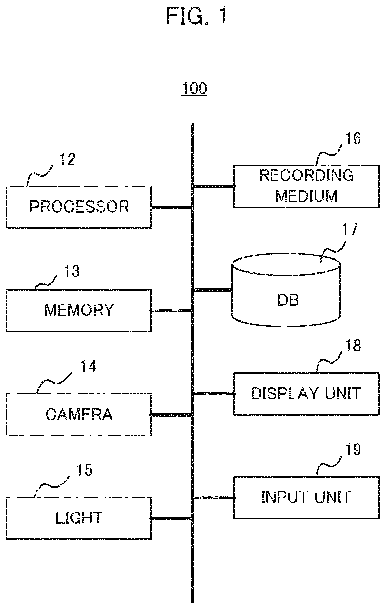

FIG. 1 is a block diagram showing a hardware configuration of the terminal device according to the first example embodiment. The terminal device 100 is a terminal device of a user and includes a processor 12, a memory 13, a camera 14, a light 15, a recording medium 16, a database (DB) 17, a display unit 18, and an input unit 19.

The processor 12 is a computer such as a CPU (Central Processing Unit) or a GPU (Graphics Processing Unit) and controls the entire terminal device 100 by executing a program prepared in advance. In particular, the processor 12 performs certificate digitization processing to be described later.

The memory 13 may be a ROM (Read Only Memory) and a RAM (Random Access Memory). The memory 13 stores various programs executed by the processor 12. The memory 13 is also used as a working memory during various processing performed by the processor 12.

The camera 14 is provided in the terminal device, and generates a photographed image of the certificate to be digitized. The light 15 is a flashlight or the like provided in the terminal device, and is used to illuminate the certificate at the time of photographing, as necessary.

The recording medium 16 is a non-volatile and non-transitory recording medium such as a disk-like recording medium and a semiconductor memory and is configured to be detachable from the terminal device 100. The recording medium 16 records various programs to be executed by the processor 12.

The DB 17 stores the photographed image of the certificate generated by the camera 14. Further, the digital data of the certificate determined to be authentic by the terminal device 100 is stored in the DB 17. The display unit 18 is a liquid crystal panel or the like provided in the terminal device, and displays the image of the certificate photographed by the camera 14 and an operation screen for registering the certificate with the terminal device. The input unit 19 is a button provided in the terminal device or a touch panel integrated with the display unit 18. Necessary instructions and inputs are made by the user to the input unit 19 at the time of executing the certificate digitization processing.

### [Functional configuration]

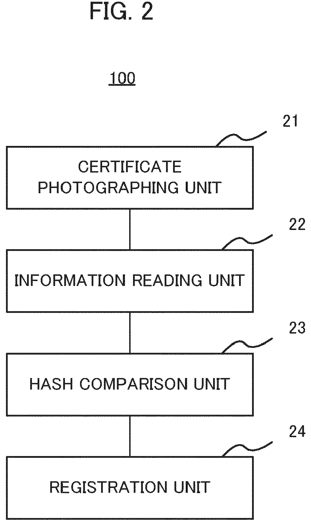

FIG. 2 is a block diagram showing a functional configuration of the terminal device 100 according to the first example embodiment. The terminal device 100 functionally includes a certificate photographing unit 21, an information reading unit 22, a hash comparison unit 23, and a registration unit 24.

The certificate photographing unit 21 controls the camera 14 and the light 15 on the basis of an instruction of a user to photograph a certificate. The certificate photographing unit 21 outputs the photographed image of the certificate (hereinafter, referred to as "certificate image") to the information reading unit 22.

The information reading unit 22 reads the character information and the face image from the certificate image. At this time, the information reading unit 22 performs correction of the certificate image, as necessary. That is, the information reading unit 22 geometrically corrects the distortion in the certificate image caused by the influence of the photographing angle of the certificate or the like.

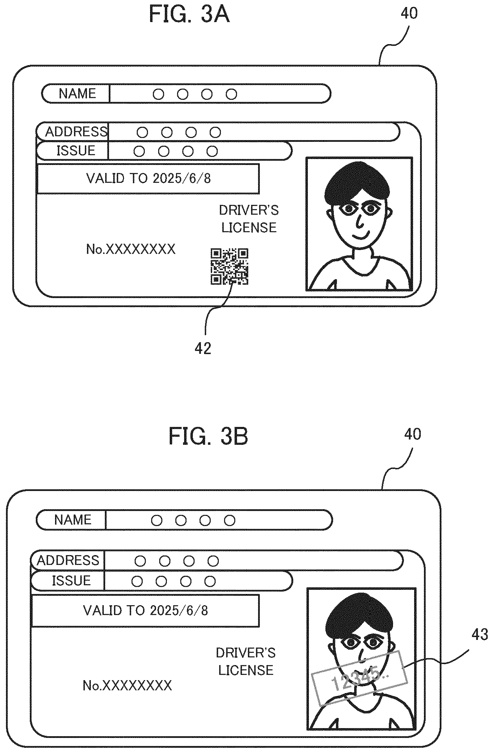

Also, the information reading unit 22 reads out the hash value (hereinafter also referred to as the "first hash value") pre-embedded in the certificate. FIGS. 3A and 3B show examples of embedding a hash value in a certificate. FIG. 3A shows an example in which the first hash value is printed as a QR code 42 on a certificate 40 that is a driver's license. In this case, the information reading unit 22 extracts the QR code from the certificate image and decodes the QR code to obtain the first hash value.

FIG. 3B shows an example in which the first hash value is embedded in the certificate 40 as a visible electronic watermark 43. In this case, the information reading unit 22 acquires the first hash value from the certificate image using the reading method corresponding to the embedding method of the electronic watermark 43. Note that the electronic watermark 43 may be invisibly embedded. Further, when the certificate 40 is a medium having a storage unit such as an IC card, the first hash value can be stored in the storage unit. In this case, the information reading unit 22 accesses the storage unit of the certificate to acquire the first hash value. Then, the information reading unit 22 outputs the acquired first hash value to the hash comparison unit 23.

The hash comparison unit 23 calculates the hash value (hereinafter, referred to as the "second hash value") using the character information and the face image acquired from the information reading unit 22. It should be noted that, although the method of generating hash values is not limited to a particular one, a hash method for similar retrieval of multimedia data such as Locality-sensitive Hashing can be used, for example. Then, the hash comparison unit 23 compares the first hash value obtained from the information reading unit 22 with the second hash value obtained by the calculation. The hash comparison unit 23 outputs a comparison result indicating whether or not the first hash value and the second hash value coincide with each other to the registration unit 24.

The registration unit 24 registers the certificate image according to the comparison result inputted from the hash comparison unit 23. Specifically, when the comparison result indicates that the first hash value and the second hash value coincide with each other, the registration unit 24 determines that there is no falsification of the certificate and registers the certificate image generated by the certificate photographing unit 21 with the DB 17 as the digital data. On the other hand, when the comparison result indicates that the first hash value and the second hash value do not coincide with each other, the registration unit 24 displays a message indicating that the certificate cannot be registered, and terminates the processing.

When the registration unit 24 registers the certificate image photographed by the certificate photographing unit 21 with the DB 17, if there is distortion or the like due to the influence of the photographing angle in the certificate image as described above, it is preferable to register the image after performing the geometric correction to remove the distortion. If the information reading unit 22 has already performed the geometric correction, the registration unit 24 may register the certificate image after the correction.

Instead of registering the certificate image itself with the DB 17, the registration unit 24 may register the character information and the face image extracted from the certificate image by the information reading unit 22 with the DB 17. For example, when the certificate is a driver's license, the registration unit 24 may register information specific to the user, such as a name, an address, an expiration date, a driver's license number, and a face image, extracted from the certificate image with the DB 17. In this case, when displaying the information of the registered certificate on the display unit 18, the terminal device 100 may read those registered information from the DB 17 and insert them to the corresponding portions in a template of the driver's license to generate and display an image of a pseudo driver's license.

### [Certificate digitization processing]

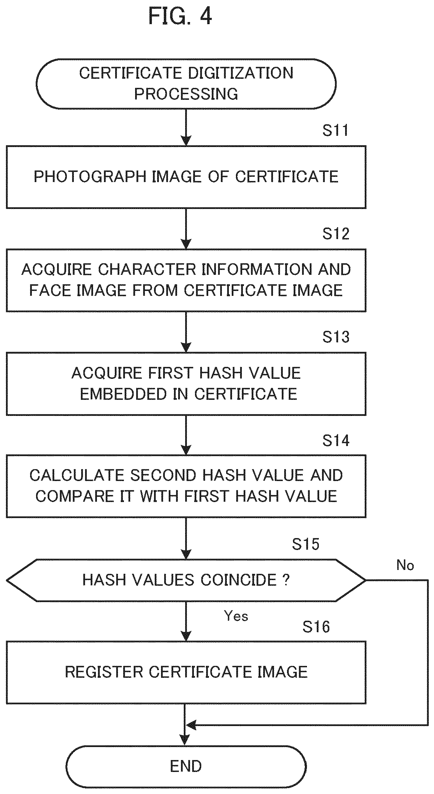

FIG. 4 is a flowchart of certificate digitization processing by the terminal device 100 of the first example embodiment. This processing is realized by the processor 12 shown in FIG. 1, which executes a program prepared in advance and operates as each element shown in FIG. 2.

First, the certificate photographing unit 21 photographs a certificate by controlling the camera 14 and the light 15 based on the photographing instruction of the user, and generates a certificate image (step S11). Next, the information reading unit 22 acquires the character information and the face image from the certificate image (step S12). Also, the information reading unit 22 acquires the first hash value embedded in the certificate (step S13). Incidentally, the order of steps S12 and S13 may be reversed, or steps S12 and S13 may be performed in parallel.

Next, the hash comparison unit 23 calculates the second hash value from the character information and the face image acquired in step S12 and compares the second hash value with the first hash value acquired in step S13 (step S14). When the first hash value and the second hash value do not coincide with each other (step S15: No), the registration unit 24 determines that there is falsification of the certificate and terminates the processing. On the other hand, when the first hash value and the second hash value coincide with each other (step S15: Yes), the registration unit 24 determines that there is no falsification of the certificate and registers the certificate image with the DB 17 as digital data (step S16). Then, the processing ends.

As described above, according to the terminal device 100 of the first example embodiment, when the character information or the face image of the certificate is falsified, it is possible to prevent the registration of the certificate.

### [Modified examples]

Next, modified examples of the first example embodiment will be described. The following modified examples can be applied in an appropriate combination.

### (Modified example 1)

As described above, the hash comparison unit 23 generates a second hash value from the character information and the face image extracted from the certificate image. At that time, the hash comparison unit 23 may generate a single hash value from the data string including both the character information and the face image, or may generate a hash value separately from each of the character information and the face image and combine those hash values to form a second hash value.

### (Modified example 2)

In the above-described example embodiment, the hash comparison unit 23 generates a hash value from the face image itself. However, the hash comparison unit 23 may generate the hash value using information related to the individuality of the face. As the information related to the individuality of the face, it is possible to use the feature quantity extracted from the face image when the face image is used for the face authentication, or the position information of the feature points such as the eye, the nose, and the mouth in the face image, for example.

### <Second example embodiment>

### [Principle]

The above-described first example embodiment can prevent registration of a certificate when falsification is made to character information or a face image of a certificate, but it cannot prevent a malicious person from obtaining a certificate of another person and registering it directly with his or her terminal device. Therefore, in the second example embodiment, the identity of the owner of the certificate and the person who performs the registration operation is checked to prevent the malicious person from registering the certificate of another person with his or her terminal device.

### [Hardware configuration]

The hardware configuration of the terminal device according to the second example embodiment is the same as the first example embodiment shown in FIG. 1, and therefore its description will be omitted.

### [Functional configuration]

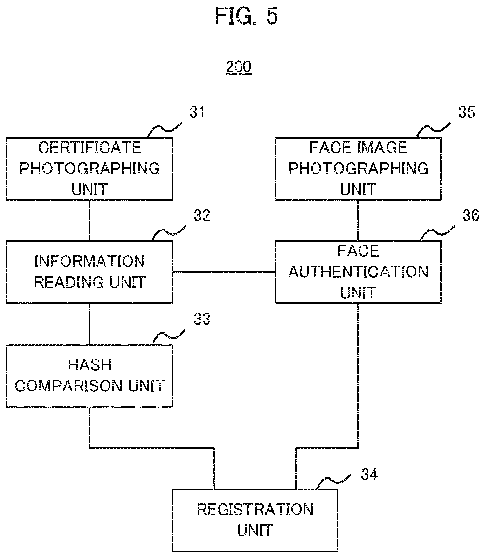

FIG. 5 is a block diagram showing a functional configuration of the terminal device 200 according to the second example embodiment. The terminal device 200 includes a certificate photographing unit 31, an information reading unit 32, a hash comparison unit 33, a registration unit 34, a face image photographing unit 35, and a face authentication unit 36. Since the certificate photographing unit 31, the information reading unit 32, the hash comparison unit 33, and the registration unit 34 are basically the same as the certificate photographing unit 21, the information reading unit 22, the hash comparison unit 23, and the registration unit 24 of the first example embodiment, description thereof will be omitted.

The face image photographing unit 35 controls the camera 14 and the light 15 on the basis of an instruction of a user to photograph a face image of a person (hereinafter, referred to as an "operator") who performs a registration operation of the certificate. The face image photographing unit 35 outputs the photographed face image of the operator (hereinafter, referred to as "photographed face image") to the face authentication unit 36.

The information reading unit 32 extracts the character information and the face image from the certificate image in the same manner as the first example embodiment and outputs the face image to the face authentication unit 36. The face authentication unit 36 collates the photographed face image inputted from the face image photographing unit 35 with the face image of the certificate inputted from the information reading unit 32 (hereinafter, referred to as "certificate face image") to perform face authentication. Then, the face authentication unit 36 outputs the face authentication result to the registration unit 34.

The registration unit 34 registers the certificate image according to the comparison result inputted from the hash comparison unit 33 and the face authentication result inputted from the face authentication unit 36. Specifically, when the comparison result indicates that the first hash value coincides with the second hash value, and the face authentication result indicates that the photographed face image and the certificate face image show the same person, the registration unit 34 stores the certificate image generated by the certificate photographing unit 31 in the DB 17 as the digital data. On the other hand, when the comparison result indicates that the hash values do not coincident with each other or the face authentication result indicates that the images do not show the same person, the registration unit 34 displays a message indicating that the certificate cannot be registered, and terminates the processing.

### [Certificate digitization processing]

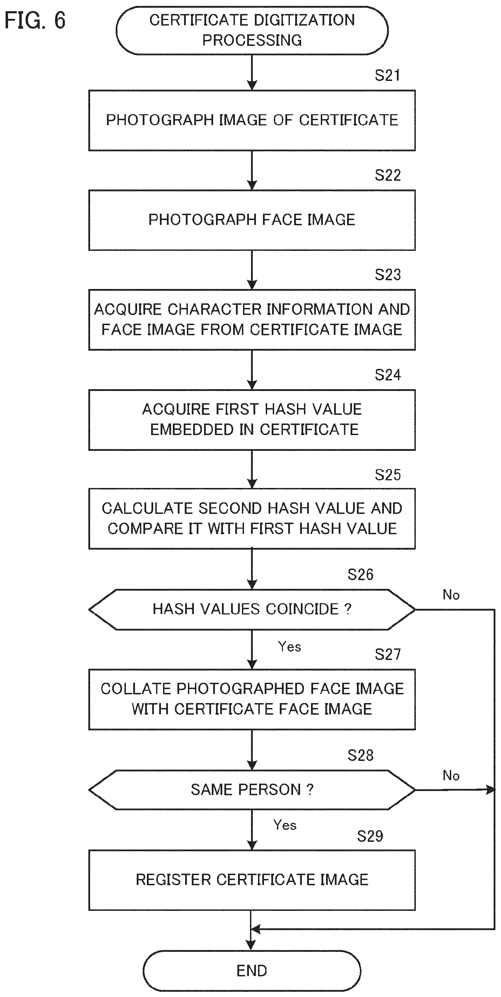

FIG. 6 is a flowchart of certificate digitization processing by the terminal device 200 of the second example embodiment. This processing is realized by the processor 12 shown in FIG. 1, which executes a program prepared in advance and operates as each element shown in FIG. 2.

First, the certificate photographing unit 31 controls the camera 14 and the light 15 based on the photographing instruction of the user to photographs a certificate, and generates a certificate image (step S21). Also. the face image photographing unit 26 controls the camera 14 and the light 15 based on the photographing instruction of the user to photograph the face of the operator and generates the face image (step S22). The order of steps S21 and S22 may be reversed. Since the processing of steps S23 to S25 is the same as steps S12 to S14 of the certificate digitization processing of the first example embodiment shown in FIG. 4, description thereof will not be repeated.

Next, the hash comparison unit 33 calculates a second hash value from the character information and the face image acquired in step S23 and compares the second hash value with the first hash value acquired in step S24 (step S26). When the first hash value and the second hash value do not coincide with each other (step S26: No), the registration unit 34 determines that there is falsification of the certificate and terminates the processing. On the other hand, when the first hash value and the second hash value coincide with each other (step S26: Yes), the face authentication unit 36 collates the photographed face image obtained in step S22 with the certificate face image obtained from the certificate image (step S27).

When the photographed face image and the certificate face image does not show the same person (step S28: No), the registration unit 34 determines that the operator is not the owner of the certificate, and terminates the processing. On the other hand, when the photographed face image and the certificate face image show the same person (step S28: Yes), the registration unit 34 determines that there is no falsification of the certificate image and that the operator is the owner of the certificate, and registers the certificate image with the DB 17 as digital data (step S29). Then, the processing ends. The determination process of steps S26 and S28 may be reversed in order, or may be performed in parallel.

As described above, the terminal device 200 of the second example embodiment registers the certificate when there is no falsification in the character information and face image of the certificate and the person performing the registration operation is the owner of the certificate. Thus, it is possible to prevent that a person registers the certificate of another person with his or her own terminal device.

### [Modified examples]

Next, modified examples of the second example embodiment will be described. The modified examples 1 and 2 described in the first example embodiment can be similarly applied to the second example embodiment. Further, the following modified examples may be applied to the second example embodiment.

### (Modified example 3)

In the second example embodiment, the certificate photographing unit 31 photographs a certificate, and the face image photographing unit 35 photographs the face image of the operator. At that time, it is preferable to perform the photographing of the certificate and the face image at the same time. Usually, a terminal device such as a smartphone or a tablet has two cameras, i.e., an out-camera and an in-camera. The out-camera is provided on the back side of the terminal device, and photographs a subject displayed on the liquid crystal display of the terminal device. The in-camera is provided on the front side of the terminal device and photographs the side of the user who is viewing the liquid crystal display of the terminal device. Therefore, when the terminal device 200 has an out-camera and an in-camera, the certificate is photographed by the out-camera and a person's face image is photographed by the in-camera at the same time. Thus, it is possible to photograph the face image of the person who is performing the registration operation of the certificate simultaneously with photographing the certificate, and it is possible to reliably confirm the identity between the owner and the operator of the certificate. In addition, the face image of the operator may be photographed in such a manner that the operator does not notice that his or her face image is being taken.

### <Third example embodiment>

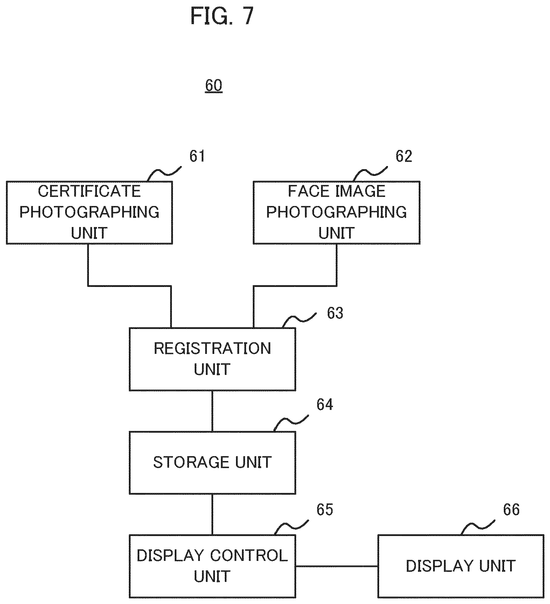

Next, a third example embodiment will be described. In the third example embodiment, the terminal device according to the present disclosure is applied to the registration of a driver's license. FIG. 7 shows a configuration of a terminal device 60 according to the third example embodiment. The terminal device 60 basically has the same hardware configuration as the first example embodiment shown in FIG. 1.

### [Configuration]

The terminal device 60 includes a certificate photographing unit 61, a face image photographing unit 62, a registration unit 63, a storage unit 64, a display control unit 65, and a display unit 66. The certificate photographing unit 61 photographs a driver's license which is a certificate by a camera or the like. The certificate photographing unit 61 outputs the certificate image generated by the photographing to the registration unit 63. The face image photographing unit 62 photographs the face image of the operator performing the registration operation of the certificate by a camera or the like, and outputs the face image to the registration unit 63.

The registration unit 63 performs the same determination as in the second example embodiment using the certificate image generated by the certificate photographing unit 61 and the face image generated by the face image photographing unit 62. That is, the registration unit 63 registers the certificate image with the storage unit 64 when it determines that there is no falsification of the certificate based on the certificate image and that the operator is the same person as the owner of the certificate based on the face image.

After the certificate image is registered with the storage unit 64, the display control unit 65 displays the certificate image registered with the storage unit 64 on the display unit 66 in accordance with the user's operation. Incidentally, the display unit 66 is constituted by a touch panel or the like, and may also function as an input unit.

### [Registration method]

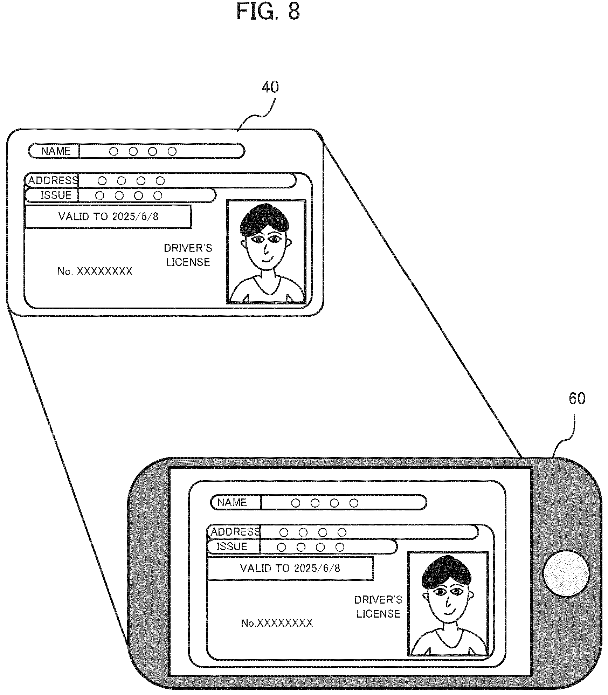

Next, a method of registering the certificate image will be specifically described. First, the operator photographs a certificate image. FIG. 8 shows a manner of photographing a certificate image. As shown, the operator operates the camera of the terminal device 60, and the certificate photographing unit 61 photographs a certificate 40 which is a driver's license. In one example in this case, when the operator activates the registration application and taps the photographing button, the camera of the terminal device 60 photographs the certificate. In another example, when the operator activates the registration application, the registration application may display the count down "3, 2, 1" at an appropriate timing and automatically photographs the certificate 40 by the camera. In yet another example, when the operator activates the registration application, the registration application automatically starts the camera of the terminal device 60, and detects that the certificate 40 is in the captured image of the camera and automatically photographs the certificate 40, like a QR code (registered trademark) reader generally used in a smart phone.

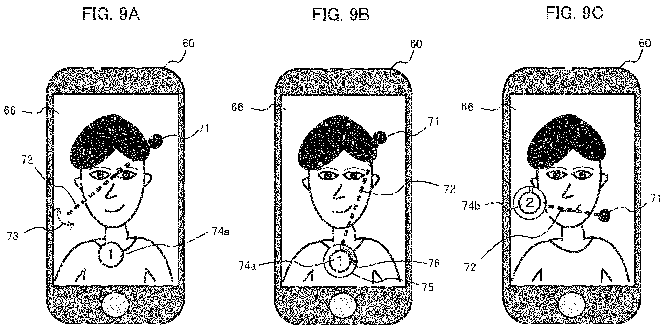

Next, the operator photographs a face image. FIG. 9 shows a manner of photographing a face image. As shown in FIG. 9A, when photographing a face image, the terminal device 60 displays a cursor 72 on the display unit 66. The cursor 72 moves in accordance with the direction of the operator's face being imaged by the camera. Specifically, the cursor 72 moves using the end point 71 as a starting point, and the direction of the cursor 72 is changed in accordance with the direction of the operator's face in the camera, as indicated by an arrow 73. Further, in the display unit 66, the target point 74a is displayed.

The operator changes the direction of his or her face so that the tip (the end point opposite to the end point 71) of the cursor 72 coincides with the target point 74a. When the tip of the cursor 72 coincides with the target point 74a, a circular gage 75 is displayed around the target point 74a as shown in FIG. 9B. The gauge 75 indicates the duration of the state in which the tip of cursor 72 coincides with the target point 74a (hereinafter referred to as the "cursor coincident state"). The operator maintains the direction of his or her face in the cursor coincident state as shown in FIG. 9B. When the operator maintains the cursor coincident state, the pointer 76 of the gauge 75 moves around the target point 74a. When the duration of the cursor coincidence state reaches a predetermined time (for example, several seconds), the pointer 76 moves around the target point 74a and returns to the 0 o'clock position. When the duration of the cursor coincident state reaches the predetermined time, the terminal device 60 turns off the target point 74a, and displays the next target point 74b as shown in FIG. 9C.

When the next target point 74b is displayed, the operator adjusts the direction of his or her face so that the tip of the cursor 72 coincides with the target point 74b in the same manner and maintains the cursor coincident state for a predetermined period of time. The terminal device 60 repeats this process a predetermined number of times. The reason for performing such process is to confirm that the operator is actually photographing his or her face image using the terminal device. That is, when the operator attempts to register a certificate by displaying another person's face image or the like on the terminal device 60, it is not possible to place the tip of the cursor 72 on the target point 74, and hence the registration operation is stopped.

The face image photographing unit 62 photographs the face image of the operator while the operator places the tip of the cursor 72 on the target point 74 a predetermined number of times. For example, the face image photographing unit 62 photographs the face image of the operator while the operator maintains the direction of the face in a state that the tip of the cursor 72 coincides with the target point 74.

Thus, when the certificate image and the face image are obtained, the registration unit 63 registers the certificate image with the storage unit 64 when it determines that there is no falsification in the certificate by using the certificate image and that the operator is the same person as the owner of the certificate by using the face image.

### [Display method]

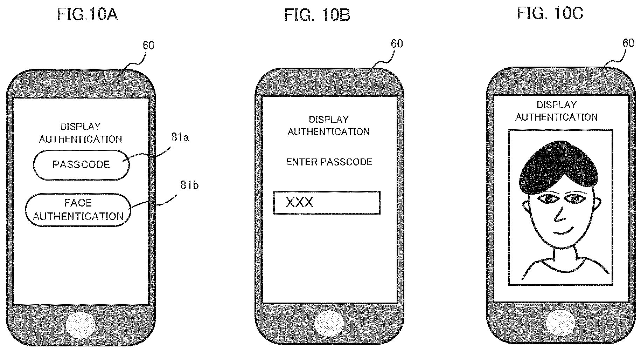

Next, the display method of the registered certificate image will be described. FIG. 10 shows an example of an authentication method for displaying certificate image. When the terminal device 60 is set to a certificate display mode, the display authentication screen shown in FIG. 10A is displayed. The user selects the method of display authentication by the buttons 81a and 81b. When the user selects the passcode button 81a, the terminal device 60 displays the passcode entry screen shown in FIG. 10B. The user performs display authentication by inputting the passcode registered in advance. On the other hand, when the user selects the button 81b of the face authentication, the terminal device 60 displays the face authentication screen shown in FIG. 10C. The user performs display authentication by displaying his or her face with a camera.

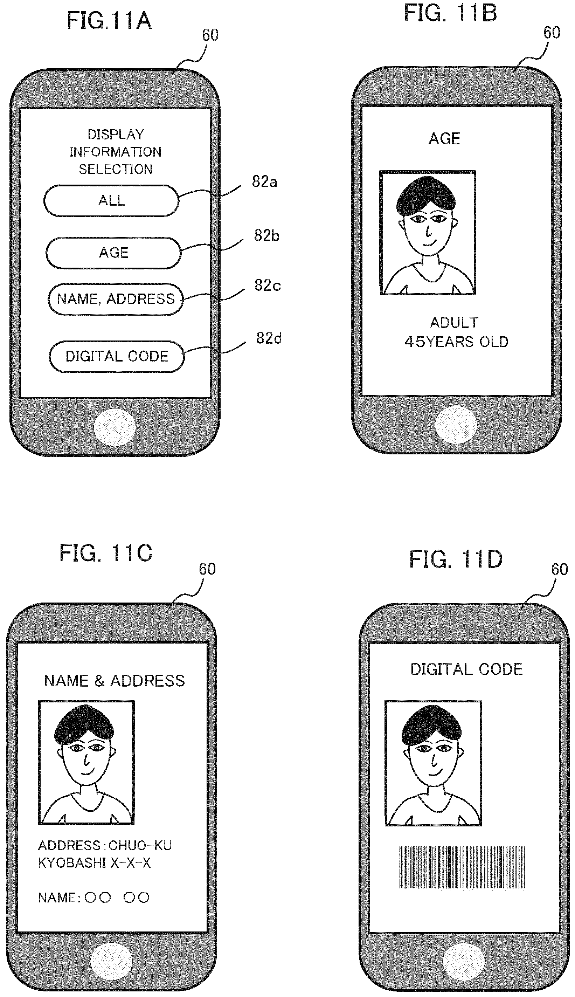

When the display authentication is successful in any method, the terminal device 60 displays the display information selection screen shown in FIG. 11A. The display information selection screen includes a button 82a designating all information as the display information, a button 82b designating an age, a button 82c designating a name and an address, and a button 82d designating a digital code.

When the user selects the button 82b in the display information selection screen, the user's face image and age are displayed as shown in FIG. 11B. When the user selects the button 82c in the display information selection screen, a face image of the user and the address and name of the user are displayed as shown in FIG. 11C. When the user selects the button 82d in the display information selection screen, the user's face image and a digital code are displayed as shown in FIG. 11D. Note that the digital code is generated by encoding the name, the address, the driver's license number, and other personal information included in the certificate. Personal information can be acquired by reading the displayed digital code with the corresponding code reader.

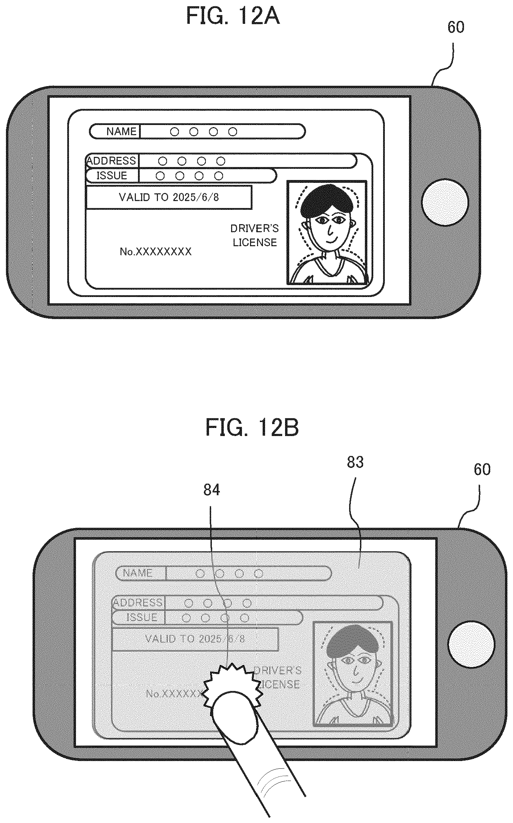

On the other hand, when the user selects the button 82a in the display information selection screen, the entire certificate image is displayed as shown in FIG. 12. Here, the face image is displayed with some movement in the displayed certificate image. For example, the face image is displayed as a moving image in which the direction of the face changes slightly in the left-right direction or the up-down direction. Thus, it can be proven that the displayed image is not the image generated by simply photographing the image of the certificate and displaying it on the terminal device 60. That is, the movement of the face image proves that the certificate image has been formally registered using the registration application of the terminal device 60.

Further, if the user touches a part of the screen of the terminal device 60 as shown in FIG. 12B when the entire certificate image is being displayed, the region of the certificate is colored with a predetermined color, as shown by the reference numeral 83. Further, a pointer 84 of a predetermined shape is displayed at a position touched by a user with a finger on the display screen of the terminal device 60. As the user moves the position of the finger on the display screen, the pointer 84 moves in accordance with the movement of the user's finger. In this way, coloring and displaying the pointer 84 at the touched position when the user touches the display are methods for indicating that the terminal device 60 is not simply displaying the photographed image of the certificate, but displaying the certificate image formally registered using the registration application.

### <Fourth example embodiment>

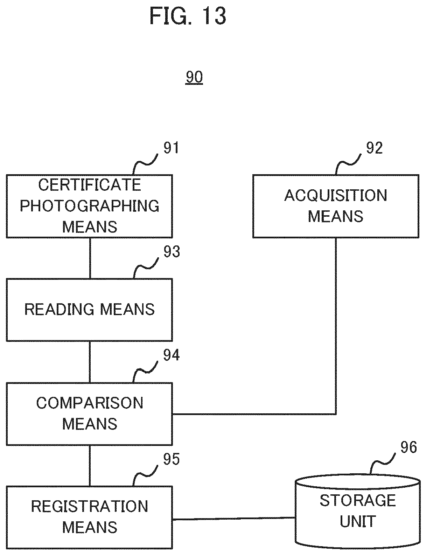

FIG. 13 is a block diagram illustrating a functional configuration of the information processing device 90 according to the fourth example embodiment. The information processing device 90 registers the certificate as electronic data. The information processing device 90 includes a certificate photographing means 91, an acquisition means 92, a reading means 93, a comparison means 94, a registration means 95, and a storage unit 96. The certificate photographing means 91 photographs a certificate and generates a certificate image. The acquisition means 92 acquires a first hash value from the certificate. The reading means 93 reads character information and a face image from the certificate image. The comparison means 94 calculates a second hash value using the character information and the face image and compares the second hash value with the first hash value. The registration means 95 stores information related to the certificate in the storage unit 96 when the first hash value and the second hash value coincide with each other.

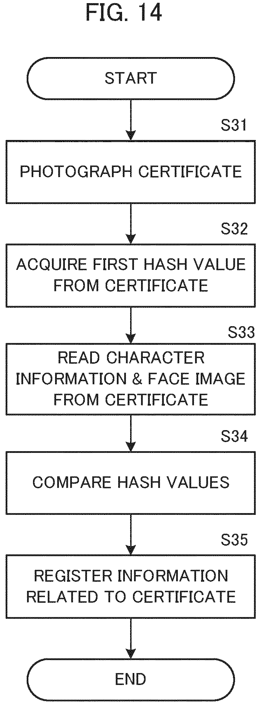

FIG. 14 is a flowchart of registration processing according to the fourth example embodiment. The certificate photographing means 91 photographs a certificate and generates a certificate image (step S31). The acquisition means 92 acquires a first hash value from the certificate (step S32). The reading means 93 reads character information and a face image from the certificate image (step S33). The comparison means 94 calculates a second hash value using the character information and the face image and compares the second hash value with the first hash value (step S34). The registration means 95 stores information related to the certificate in the storage unit 96 when the first hash value and the second hash value coincide with each other (step S35). Then, the processing ends.

According to the fourth example embodiment, the information processing device 90 calculates the second hash value from the character information and the face image extracted from the certificate image and compares the second hash value with the first hash value previously held in the certificate. When the two hash values coincide with each other, the information processing device 90 registers the information of the certificate in the storage unit 96 on the assumption that there is no falsification of the certificate. Therefore, it is possible to register the information of the certificate as electronic data only when there is no falsification in the contents of the certificate.

While the present disclosure has been described with reference to the example embodiments and examples, the present disclosure is not limited to the above example embodiments and examples. Various changes which can be understood by those skilled in the art within the scope of the present disclosure can be made in the configuration and details of the present disclosure.

### DESCRIPTION OF SYMBOLS

12 Processor
21, 31, 61 Certificate photographing unit
22, 32 Information reading unit
23, 33 Hash comparison unit
24, 34, 63 Registration unit
35, 62 Face image photographing unit
36 Face authentication unit
64 Storage unit
65 Display control unit
66 Display unit
60, 100, 200 Terminal device

## Claims

1. An information processing device comprising:
a certificate acquisition means for acquiring a certificate and generating a certificate image;
an acquisition means for acquiring a first hash value from the certificate;
a reading means for reading information on the surface of the certificate from the certificate image;
a comparison means for calculating a second hash value using the information and comparing the second hash value with the first hash value;
a registration means for storing information related to the certificate based on a result of comparing the second hash value with the first hash value,
a means for acquiring a face image of a user by a camera;
a means for comparing the acquired face image with a face image read from the certificate image;
a means for displaying the acquired face image and a target point on a display; and
a means for displaying, on the display, a cursor that moves in accordance with a direction of the user's face in the acquired face image,
wherein the registration means stores the information related to the certificate when the first hash value and the second hash value coincide with each other and the acquired face image and the face image read from the certificate image coincide with each other, and
wherein the acquiring means acquires the face image by the camera when the position of the cursor and the position of the target point on the display coincide with each other.

2. The information processing device according to claim 1,
wherein the first hash value is described on the certificate as code information, and
wherein the acquisition means acquires the first hash value by reading the code information from the certificate image.

3. The information processing device according to claim 1,
wherein the first hash value is provided in the certificate as an electronic watermark, and
wherein the acquisition means acquires the first hash value by reading the electronic watermark from the certificate image.

4. The information processing device according to claim 1,
wherein the certificate includes a storage unit,
wherein the first hash value is stored in the storage unit, and
wherein the acquisition means reads the first hash value from the storage unit of the certificate.

5. The information processing device according to any one of claims 1 to 4, wherein the comparison means generates the second hash value from a data string including character information and the face image.

6. The information processing device according to any one of claims 1 to 4, wherein the comparison means generates the second hash value by combining a hash value generated from character information and a hash value generated from the face image.

7. The information processing device according to claim 5 or 6, wherein the comparison means extracts feature information from the face image and generates the hash value using the feature information.

8. The information processing device according to any one of claims 1 to 7, wherein the registration means stores the certificate image in the storage unit.

9. The information processing device according to any one of claims 1 to 7, wherein the registration means stores information included in the certificate image and the face image in the storage unit.

10. The information processing device according to claim 1, further comprising:
a means for displaying a button indicating an authentication by passcode and a button indicating a authentication by face;
a means for authenticating based on the button selected; and
a means for displaying a registered certificate image in a case where the display authentication is successful in any method.

11. An information processing method comprising:
acquiring a certificate and generating a certificate image;
acquiring a first hash value from the certificate;
reading information on the surface of the certificate from the certificate image;
calculating a second hash value using the information;
comparing the second hash value with the first hash value;
storing information related to the certificate based on a result of comparing the second hash value with the first hash value,
acquiring a face image of a user by a camera;
comparing the acquired face image with a face image read from the certificate image;
displaying the acquired face image and a target point on a display; and
displaying, on the display, a cursor that moves in accordance with a direction of the user's face in the acquired face image,
wherein the information related to the certificate is stored when the first hash value and the second hash value coincide with each other and the acquired face image and the face image read from the certificate image coincide with each other, and
wherein the face image is acquired by the camera when the position of the cursor and the position of the target point on the display coincide with each other.

12. A program comprising instructions which, when the program is executed by a computer, cause the computer to execute processing of:
acquiring a certificate and generating a certificate image;
acquiring a first hash value from the certificate;
reading information on the surface of the certificate from the certificate image;
calculating a second hash value using the information;
comparing the second hash value with the first hash value;
storing information related to the certificate based on a result of comparing the second hash value with the first hash value
acquiring a face image of a user by a camera;
comparing the acquired face image with a face image read from the certificate image;
displaying the acquired face image and a target point on a display; and
displaying, on the display, a cursor that moves in accordance with a direction of the user's face in the acquired face image,
wherein the information related to the certificate is stored when the first hash value and the second hash value coincide with each other and the acquired face image and the face image read from the certificate image coincide with each other, and
wherein the face image is acquired by the camera when the position of the cursor and the position of the target point on the display coincide with each other.

## Patentansprüche

1. Informationsverarbeitungsvorrichtung, umfassend:
ein Zertifikaterlangungsmittel zum Erlangen eines Zertifikats und Erzeugen eines Zertifikats eines Zertifikatbildes;
ein Erlangungsmittel zum Erlangen eines ersten Hashwerts aus dem Zertifikat;
ein Lesemittel zum Lesen von Information auf der Oberfläche des Zertifikats aus dem Zertifikatbild;
ein Vergleichsmittel zum Berechnen eines zweiten Hashwerts unter Verwendung der Information und Vergleichen des zweiten Hashwerts mit dem ersten Hashwert;
ein Registrierungsmittel zum Speichern von Information in Bezug auf das Zertifikat basierend auf einem Ergebnis eines Vergleichens des zweiten Hashwerts mit dem ersten Hashwert;
ein Mittel zum Erlangen eines Gesichtsbildes eines Benutzers durch eine Kamera;
ein Mittel zum Vergleichen des erlangten Gesichtsbildes mit einem aus dem Zertifikatbild gelesenen Gesichtsbild;
ein Mittel zum Anzeigen des erlangten Gesichtsbildes und eines Zielpunkts auf einer optischen Anzeigeeinheit; und
ein Mittel zum Anzeigen eines Cursors, der sich gemäß einer Richtung des Gesichts des Benutzers im erlangten Gesichtsbild bewegt, auf der optischen Anzeigeeinheit,
wobei das Registrierungsmittel die Information in Bezug auf das Zertifikat speichert, wenn der erste Hashwert und der zweite Hashwert miteinander übereinstimmen und das erlangte Gesichtsbild und das aus dem Zertifikatbild gelesene Gesichtsbild miteinander übereinstimmen, und
wobei das Erlangungsmittel das Gesichtsbild durch die Kamera erlangt, wenn die Position des Cursors und die Position des Zielpunkts auf der optischen Anzeigeeinheit miteinander übereinstimmen.

2. Informationsverarbeitungseinrichtung nach Anspruch 1,
wobei der erste Hashwert auf dem Zertifikat als Codeinformation beschrieben ist, und
wobei das Erlangungsmittel den ersten Hashwert durch Lesen der Codeinformation aus dem Zertifikatbild erlangt.

3. Informationsverarbeitungseinrichtung nach Anspruch 1,
wobei der erste Hashwert im Zertifikat als elektronisches Wasserzeichen bereitgestellt ist, und
wobei das Erlangungsmittel den ersten Hashwert durch Lesen des elektronischen Wasserzeichens aus dem Zertifikatbild erlangt.

4. Informationsverarbeitungseinrichtung nach Anspruch 1,
wobei das Zertifikat eine Speichereinheit enthält,
wobei der erste Hashwert in der Speichereinheit gespeichert wird, und
wobei das Erlangungsmittel den ersten Hashwert aus der Speichereinheit des Zertifikats liest.

5. Informationsverarbeitungseinrichtung nach einem der Ansprüche 1 bis 4, wobei das Vergleichsmittel den zweiten Hashwert aus einer Datenzeichenfolge erzeugt, die Zeicheninformation und das Gesichtsbild enthält.

6. Informationsverarbeitungseinrichtung nach einem der Ansprüche 1 bis 4, wobei das Vergleichsmittel den zweiten Hashwert durch Kombinieren eines aus Zeicheninformation erzeugten Hashwerts und eines aus dem Gesichtsbild erzeugten Hashwerts erzeugt.

7. Informationsverarbeitungsvorrichtung nach Anspruch 5 oder 6, wobei das Vergleichsmittel Merkmalsinformation aus dem Gesichtsbild extrahiert und den Hashwert unter Verwendung der Merkmalsinformation erzeugt.

8. Informationsverarbeitungsvorrichtung nach einem der Ansprüche 1 bis 7, wobei das Registrierungsmittel das Zertifikatbild in der Speichereinheit speichert.

9. Informationsverarbeitungsvorrichtung nach einem der Ansprüche 1 bis 7, wobei das Registrierungsmittel in dem Zertifikatbild und dem Gesichtsbild enthaltene Information in der Speichereinheit speichert.

10. Informationsverarbeitungsvorrichtung nach Anspruch 1, weiterhin umfassend:
ein Mittel zum Anzeigen einer Schaltfläche, die eine Authentifizierung mittels Passcode anzeigt, und einer Schaltfläche, die eine Authentifizierung mittels Gesicht anzeigt;
ein Mittel zum Authentifizieren basierend auf der ausgewählten Schaltfläche; und
ein Mittel zum Anzeigen eines registrierten Zertifikatbildes in einem Fall, in welchem die Anzeigeauthentifizierung bei einer beliebigen Methode erfolgreich ist.

11. Informationsverarbeitungsverfahren, umfassend:
Erlangen eines Zertifikats und Erzeugen eines Zertifikats eines Zertifikatbildes;
Erlangen eines ersten Hashwerts aus dem Zertifikat;
Lesen von Information auf der Oberfläche des Zertifikats aus dem Zertifikatbild;
Berechnen eines zweiten Hashwerts unter Verwendung der Information;
Vergleichen des zweiten Hashwerts mit dem ersten Hashwert;
Speichern von Information in Bezug auf das Zertifikat basierend auf einem Ergebnis eines Vergleichens des zweiten Hashwerts mit dem ersten Hashwert;
Erlangen eines Gesichtsbildes eines Benutzers durch eine Kamera;
Vergleichen des erlangten Gesichtsbildes mit einem aus dem Zertifikatbild gelesenen Gesichtsbild;
Anzeigen des erlangten Gesichtsbildes und eines Zielpunkts auf einer optischen Anzeigeeinheit; und
Anzeigen eines Cursors, der sich gemäß einer Richtung des Gesichts des Benutzers im erlangten Gesichtsbild bewegt, auf der optischen Anzeigeeinheit,
wobei die Information in Bezug auf das Zertifikat gespeichert wird, wenn der erste Hashwert und der zweite Hashwert miteinander übereinstimmen und das erlangte Gesichtsbild und das aus dem Zertifikatbild gelesene Gesichtsbild miteinander übereinstimmen, und
wobei das Gesichtsbild durch die Kamera erlangt wird, wenn die Position des Cursors und die Position des Zielpunkts auf der optischen Anzeigeeinheit miteinander übereinstimmen.

12. Programm, das Anweisungen umfasst, die dann, wenn das Programm durch einen Computer ausgeführt wird, veranlassen, dass der Computer ein Verarbeiten von folgendem ausführt:
Erlangen eines Zertifikats und Erzeugen eines Zertifikats eines Zertifikatbildes;
Erlangen eines ersten Hashwerts aus dem Zertifikat;
Lesen von Information auf der Oberfläche des Zertifikats aus dem Zertifikatbild;
Berechnen eines zweiten Hashwerts unter Verwendung der Information;
Vergleichen des zweiten Hashwerts mit dem ersten Hashwert;
Speichern von Information in Bezug auf das Zertifikat basierend auf einem Ergebnis eines Vergleichens des zweiten Hashwerts mit dem ersten Hashwert;
Erlangen eines Gesichtsbildes eines Benutzers durch eine Kamera;
Vergleichen des erlangten Gesichtsbildes mit einem aus dem Zertifikatbild gelesenen Gesichtsbild;
Anzeigen des erlangten Gesichtsbildes und eines Zielpunkts auf einer optischen Anzeigeeinheit; und
Anzeigen eines Cursors, der sich gemäß einer Richtung des Gesichts des Benutzers im erlangten Gesichtsbild bewegt, auf der optischen Anzeigeeinheit,
wobei die Information in Bezug auf das Zertifikat gespeichert wird, wenn der erste Hashwert und der zweite Hashwert miteinander übereinstimmen und das erlangte Gesichtsbild und das aus dem Zertifikatbild gelesene Gesichtsbild miteinander übereinstimmen, und
wobei das Gesichtsbild durch die Kamera erlangt wird, wenn die Position des Cursors und die Position des Zielpunkts auf der optischen Anzeigeeinheit miteinander übereinstimmen.

## Revendications

1. Dispositif de traitement d'informations comportant :
un moyen d'acquisition de certificat pour acquérir un certificat et générer une image de certificat ;
un moyen d'acquisition pour acquérir une première valeur de hachage à partir du certificat ;
un moyen de lecture pour lire des informations sur la surface du certificat à partir de l'image de certificat ;
un moyen de comparaison pour calculer une deuxième valeur de hachage à l'aide des informations et comparer la deuxième valeur de hachage à la première valeur de hachage ;
un moyen d'enregistrement pour stocker des informations relatives au certificat sur la base d'un résultat de comparaison de la deuxième valeur de hachage à la première valeur de hachage,
un moyen d'acquisition d'une image de visage d'un utilisateur par une caméra ;
un moyen de comparaison de l'image de visage acquise à une image de visage lue à partir de l'image de certificat ;
un moyen d'affichage de l'image de visage acquise et d'un point cible sur un dispositif d'affichage ; et
un moyen d'affichage, sur le dispositif d'affichage, d'un curseur qui se déplace conformément à une direction du visage de l'utilisateur dans l'image de visage acquise,
dans lequel le moyen d'enregistrement stocke les informations relatives au certificat lorsque la première valeur de hachage et la deuxième valeur de hachage coïncident l'une avec l'autre et que l'image de visage acquise et l'image de visage lue à partir de l'image de certificat coïncident l'une avec l'autre, et
dans lequel le moyen d'acquisition acquiert l'image de visage par la caméra lorsque la position du curseur et la position du point cible sur le dispositif d'affichage coïncident l'une avec l'autre.

2. Dispositif de traitement d'informations selon la revendication 1,
dans lequel la première valeur de hachage est décrite sur le certificat sous forme d'informations de code, et
dans lequel le moyen d'acquisition acquiert la première valeur de hachage en lisant les informations de code à partir de l'image de certificat.

3. Dispositif de traitement d'informations selon la revendication 1,
dans lequel la première valeur de hachage est fournie dans le certificat sous forme de filigrane électronique, et
dans lequel le moyen d'acquisition acquiert la première valeur de hachage en lisant le filigrane électronique à partir de l'image de certificat.

4. Dispositif de traitement d'informations selon la revendication 1,
dans lequel le certificat inclut une unité de stockage,
dans lequel la première valeur de hachage est stockée dans l'unité de stockage, et
dans lequel le moyen d'acquisition lit la première valeur de hachage à partir de l'unité de stockage du certificat.

5. Dispositif de traitement d'informations selon l'une quelconque des revendications 1 à 4, dans lequel le moyen de comparaison génère la deuxième valeur de hachage à partir d'une chaîne de données incluant des informations de caractère et l'image de visage.

6. Dispositif de traitement d'informations selon l'une quelconque des revendications 1 à 4, dans lequel le moyen de comparaison génère la deuxième valeur de hachage en combinant une valeur de hachage générée à partir d'informations de caractère et une valeur de hachage générée à partir de l'image de visage.

7. Dispositif de traitement d'informations selon la revendication 5 ou 6, dans lequel le moyen de comparaison extrait des informations de caractéristique de l'image de visage et génère la valeur de hachage à l'aide des informations de caractéristique.

8. Dispositif de traitement d'informations selon l'une quelconque des revendications 1 à 7, dans lequel le moyen d'enregistrement stocke l'image de certificat dans l'unité de stockage.

9. Dispositif de traitement d'informations selon l'une quelconque des revendications 1 à 7, dans lequel le moyen d'enregistrement stocke des informations incluses dans l'image de certificat et l'image de visage dans l'unité de stockage.

10. Dispositif de traitement d'informations selon la revendication 1, comportant en outre :
un moyen d'affichage d'un bouton indiquant une authentification par code d'accès et d'un bouton indiquant une authentification par visage ;
un moyen d'authentification basé sur le bouton sélectionné ; et
un moyen d'affichage d'une image de certificat enregistrée dans un cas où l'authentification d'affichage réussit dans n'importe quel procédé.

11. Procédé de traitement d'informations comportant :
l'acquisition d'un certificat et la génération d'une image de certificat ;
l'acquisition d'une première valeur de hachage à partir du certificat ;
la lecture d'informations sur la surface du certificat à partir de l'image du certificat ;
le calcul d'une deuxième valeur de hachage à l'aide des informations ;
la comparaison de la deuxième valeur de hachage à la première valeur de hachage ;
le stockage d'informations relatives au certificat sur la base d'un résultat de comparaison de la deuxième valeur de hachage à la première valeur de hachage,
l'acquisition d'une image de visage d'un utilisateur par une caméra ;
la comparaison de l'image de visage acquise à une image de visage lue à partir de l'image de certificat ;
l'affichage de l'image de visage acquise et d'un point cible sur un dispositif d'affichage ; et
l'affichage, sur le dispositif d'affichage, d'un curseur qui se déplace conformément à une direction du visage de l'utilisateur dans l'image de visage acquise,
dans lequel les informations relatives au certificat sont stockées lorsque la première valeur de hachage et la deuxième valeur de hachage coïncident l'une avec l'autre et que l'image de visage acquise et l'image de visage lue à partir de l'image de certificat coïncident l'une avec l'autre, et
dans lequel l'image de visage est acquise par la caméra lorsque la position du curseur et la position du point cible sur le dispositif d'affichage coïncident l'une avec l'autre.

12. Programme informatique comportant des instructions qui, lorsque le programme est exécuté par un ordinateur, amènent l'ordinateur à exécuter le traitement suivant :
l'acquisition d'un certificat et la génération d'une image de certificat ;
l'acquisition d'une première valeur de hachage à partir du certificat ;
la lecture d'informations sur la surface du certificat à partir de l'image du certificat ;
le calcul d'une deuxième valeur de hachage à l'aide des informations ;
la comparaison de la deuxième valeur de hachage à la première valeur de hachage ;
le stockage d'informations relatives au certificat sur la base d'un résultat de comparaison de la deuxième valeur de hachage à la première valeur de hachage
l'acquisition d'une image de visage d'un utilisateur par une caméra ;
la comparaison de l'image de visage acquise à une image de visage lue à partir de l'image de certificat ;
l'affichage de l'image de visage acquise et d'un point cible sur un dispositif d'affichage ; et
l'affichage, sur le dispositif d'affichage, d'un curseur qui se déplace conformément à une direction du visage de l'utilisateur dans l'image de visage acquise,
dans lequel les informations relatives au certificat sont stockées lorsque la première valeur de hachage et la deuxième valeur de hachage coïncident l'une avec l'autre et que l'image de visage acquise et l'image de visage lue à partir de l'image de certificat coïncident l'une avec l'autre, et
dans lequel l'image de visage est acquise par la caméra lorsque la position du curseur et la position du point cible sur le dispositif d'affichage coïncident l'une avec l'autre.
